# EUROPEAN PATENT APPLICATION

(11) **EP 0 844 268 A1**
(43) Date of publication of application: **27.05.1998**
(21) Application number: 97119386.7
(22) Date of filing: 06.11.1997
(51) Int. Cl.: C08G 77/388, C08G 77/46

(54) **Polysiloxane copolymers from Michael adduct reactions**

(30) Priority: 20.11.1996 US 753132
(71) Applicant: DOW CORNING CORPORATION, Midland Michigan 48686-0994 (US)
(72) Inventor: Blizzard, John Donald, Bay City, Michigan 48 706 (US); Cobb, Vicky Sue, Elsie, Michigan 48 831 (US)
(74) Representative: Sternagel, Hans-Günther, Dr.

(57) **Abstract**

The invention is a composition formed by the reaction of
(A) at least one polysiloxane selected from

R₃SiO(SiR₂O)ₓSiR₃ (i)

or 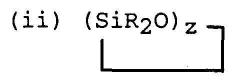 where:
x has an average value of from 0 to 1000,
z has a value of at least 3,
R is independently selected from the group
consisting of hydroxyl, alkoxy, tri-fluoropropyl, an alkyl of 1 to 4 carbon atoms, phenyl and an amine functional group, with the proviso that at least one R on the polysiloxane is an amine functional group; and
(B) at least one acrylate having the formula 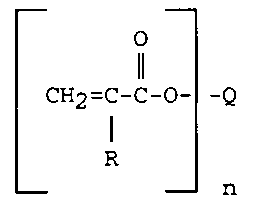 where R is H or CH₃, n ≥ 1 and Q is an organic group.

## Description

This invention relates to polysiloxane copolymers produced by a Michael Adduct reaction between polysiloxanes containing amine functional groups and acrylates having hydrocarbon containing groups.

Although the use of Michael Adduct chemistry is well known in the art, its use in silicone chemistry has been limited. A method of making functional or non-functional siloxanes has now been found using this chemistry by reacting aminofunctional siloxanes with acrylate functional moieties to produce functional or non-functional siloxanes. In contrast to vinyl-SiH addition reactions, our claimed reaction requires no additional catalyst, and the final stoichiometry of the copolymer is easily controlled by amine and acrylate molar ratios. Thus, siloxane copolymers can be made without platinum catalysts and are often clear upon completion of adduct formation.

The present invention is a composition formed by the reaction of (A) and (B) where (A) is at least one polysiloxane selected from

R₃SiO(SiR₂O)ₓSiR₃ (i)

or 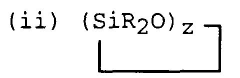 where:
x has an average value of from 0 to 1000,
z has a value of at least 3,
R is independently selected from the group
consisting of hydroxyl, alkoxy, tri-fluoropropyl, alkyl of 1 to 4 carbon atoms, phenyl and an amine functional group, with the proviso that at least one R on the polysiloxane is an amine functional group; and
(B) is at least one acrylate group having the formula 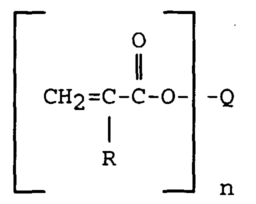 where R is H or CH₃, n ≥ 1, and Q is an organic group, wherein said reaction between A and B optionally takes place in a solvent.

In particular, our invention provides silicone containing copolymers such as silicone-glycol polymers, silicone-alkyl polymers, and silicone-aromatic polymers. These polymers are prepared by a Michael Adduct reaction, using polysiloxanes having amine functionality with an acrylate having an organic containing group such as polyether, alkyl or aromatic.

The polysiloxanes (A) of this invention have the following formula

R₃SiO(SiR₂O)ₓSiR₃

or 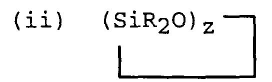 where:
x has an average value of from 0 to 1000,
z has a value of at least 3,
R is independently selected from the group
consisting of hydroxyl, alkoxy, tri-fluoropropyl, alkyl of 1 to 4 carbon atoms, phenyl and an amine functional group, with the proviso that at least one R on the polysiloxane is an amine functional group.

These linear or cyclic polymers can be waxes or liquids having viscosities at 25°C. ranging from 5 to 50,000 mm²/s (cs), and molecular weights of 300 to 25,000. While x can be any value from 0 to 1000, a preferred range is from 0 to 500, where x is most preferably 0 to 100. z is any number greater than or equal to 3.

For the purposes of this invention, the amine functional group is connected to at least one silicon atom of polysiloxane (A) through a silicon-carbon bond and preferably has the general formula 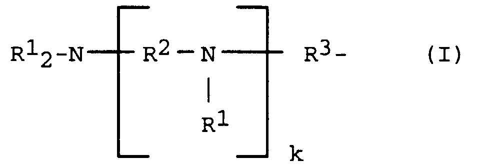 In Formula I, R¹ is a monovalent radical independently selected from the group consisting of hydrogen atom; alkyl having 1 to 18 carbon atoms, such as methyl, ethyl, propyl, isobutyl, hexyl, octyl, decyl, dodecyl and octadecyl; substituted alkyl having 1 to 18 carbon atoms, such as 3-chloropropyl or 3,3,3-trifluoropropyl; aryl having 6 to 16 carbon atoms, such as phenyl or naphthyl; substituted aryl having 6 to 30 carbon atoms, such as chlorophenyl, chlorotolyl and dichloroxylyl; arylalkyl having 7 to 9 carbon atoms, such as benzyl, phenethyl and 3-phenylpropyl; and alkylaryl having 7 to 16 carbon atoms, such as tolyl, xylyl, ethylphenyl and propyltolyl. According to our invention, at least one R¹ group in Formula (I) is hydrogen atom. The remaining R¹ groups are preferably methyl. Also, in Formula (I), R² is a divalent hydrocarbon radical having 2 to 6 carbon atoms, such as ethylene, trimethylene, tetramethylene and hexamethylene, preferably ethylene; and k is 0, 1 or 2. R³ is a divalent organic connecting group which provides a separation of at least one carbon atom between the nitrogen of Formula (I) and silicon on polysiloxane (A). This group contains at least 1 carbon atom, but its nature is otherwise not critical to the invention provided that it is chemically stable with respect to the hydrolyzable alkoxy group (i.e., does not react therewith) and it does not interfere with the reaction of the acrylic functionality of component (B) with the amine functionality of component (A). Preferably, R³ is selected from the group consisting of propylene, butylene and isobutylene.

Examples of specific amine-containing groups include -CH₂CH₂CH₂NH₂, -CH₂CH₂CH₂N(H)CH₂CH₂NH₂, -CH₂CH₂CH₂N(H)CH₂CH₂N(H)CH₂CH₂NH₂, -CH₂CH₂CH₂CH₂NH₂, -CH₂CH₂CH₂CH₂CH₂NH₂, -CH₂CH₂CH₂N(H)Me, -CH₂CH₂CH₂N(H)CH₂CH₂NMe₂, -CH₂CH₂CH₂N(H)Et, -CH₂CH(CH₃)CH₂N(H)CH₂CH₂NH₂ and -CH₂CH(CH₃)CH₂NH₂, wherein Me and Et are, and hereinafter denote, methyl and ethyl, respectively.

The polysiloxanes (A) are prepared by methods known in the art. For example, they are obtained by reacting a mixture of an alkoxysilane, such as methyltrimethoxysilane, tetraethoxysilane, tetramethoxysilane, dimethyldimethoxysilane or phenyltrimethoxysilane, and an amine-functional alkoxysilane to obtain a polyorganosiloxane having a statistical distribution of amine groups and alkoxy groups on different silicon atoms. This scheme may be practiced sequentially or simultaneously to alter the distribution of amine and alkoxy moieties. Additionally, different structures may be prepared by equilibrating the above polymers with additional organosiloxane units using a siloxane redistribution catalyst, such as an alkali metal hydroxide or silanolate. Such equilibration procedures are also employed to obtain a statistical distribution of alkoxy, alkyl and amine groups by reacting a mixture of cyclic diorganopolysiloxane, an aminoalkylalkoxysilane and, optionally, an alkoxysilane.

The polysiloxane (A) of this invention is combined with at least one acrylate group (B) having the formula 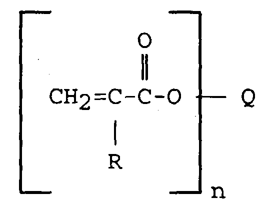 where R is H or CH₃, n ≥ 1 and Q is an organic group.

The acrylate group (B) is either monofunctional, as in the case where n is equal to 1, or multifunctional, where n is greater than 1. In the case where n ≥ 1, n is preferably in the range from 2 to 5, with the values 2, 3, or 4 being most prefered. Specific examples of acrylates useful in the practice of this invention are polyethylene glycol monoacrylate, polypropylene glycol monoacrylate, tetrafluoropropyl acrylate, methoxypoly (ethyleneoxy) ethyl acrylate, 1,6 hexanediol diacrylate, 1,4-butanediol diacrylate, ethylene glycol diacrylate, diethylene glycol diacrylate, tetraethylene glycol diacrylate, triproplyene glycol diacrylate, neopentyl glycol diacrylate, 1,4-butanediol dimethacrylate, poly(butanediol)diacrylate, tetraethyleneglycoldimethacrylate, 1,3-butylene glycol diacrylate, triethylene glycol diacrylate, polyethylene glycol diacrylate, and bisphenol A dimethacrylate, trimethylolpropane triacrylate, trimethylolpropane trimethacrylate, pentaerythritolmonohydroxy triacrylate, ditrimethylolpropane tetraacrylate, and dipentaerythritol (monohydroxy) pentaacrylate, diethyleneglycol diacrylate, tetraethyleneglycol diacrylate and polyethylenegylcol diacrylate.

Q is any organic group which does not interfere with the Michael Adduct reaction between the reactive amine of the polysiloxane (A) and the acrylate group (B).

Typical Q groups include polyethers, aliphatic, aromatic and alicyclic hydrocarbon groups. The Q groups are functional and reactive, or non-functional and non-reactive.

For example, Q can be any monovalent hydrocarbon radical such as alkyl radicals having from 1 to 100 carbon atoms, including methyl, ethyl, propyl, isopropyl, butyl, pentyl, isopentyl, neopentyl, hexyl, octyl, dodecyl, octadecyl, 3-methylheptyl, 6-butyloctadecyl, tertiary butyl, myricyl and 2,2-diethylpentyl; alkenyl radicals such as, vinyl, allyl, hexenyl, butenyl, 3-octenyl, 4,9-octadecadienyl and 4-nonenyl; alkynyl radicals such as propynyl, heptynyl, butynyl and decynyl; alkenynyl radicals such as 1-penten-3-ynyl or 2-ethyl-1-buten-3-ynyl; cycloaliphatic radicals such as, cyclohexyl, 2,4-dimethylcyclopentyl, cyclohexenyl, bicyclo[3,1,0]hexyl, tricyclo[3,2,1,1,3,8]-5-nonenyl, spiro[4,5]decyl, dispiro[4,1,4,2]-1-tridecenyl, decahydronaphthyl, 2,3-dihydroindyl and 1,2,3,4-tetrahydronaphthyl; aryl radicals such as phenyl, tolyl, xylyl, 3-ethylphenyl, xenyl, naphthyl, anthracyl, pentacenyl, 3,4-methylethylphenyl, 9,9-bifluoryl and 4-m-terphenyl; and aralkyl radicals such as 2-phenyl-octyl, 3-methyl-2-(4-isopropylphenyl)heptyl, benzyl, 2-ethyltolyl, 2-ethyl-p-cumyl, diphenylmethyl, 4,5-diphenylpentyl, 2-phenylethyl and 2-phenylpropyl.

In addition, Q can be the same or different radical or radicals containing oxyethylene groups, oxypropylene groups, oxybutylene groups or any combination thereof. A representative Q is a polyether selected from the group consisting of:
(i) -(CH₂)_{y}(OCH₂CH₂)ₐ(OCH₂CHCH₃)_{b}[OCH₂CH(CH₂CH₃)]_{c}OR',
(ii) -(CH₂)_{y}(OCH₂CH₂)ₐOR',
(iii) -(CH₂)_{y}(OCH₂CH₂)ₐ(OCH₂CHCH₃)_{b}OR',
(iv) -(CH₂)_{y}[OCH₂CH(CH₂CH₃)]_{c}OR',
(v) -(CH₂)_{y}(OCH₂CHCH₃)_{b}[OCH₂CH(CH₂CH₃)]_{c}OR',
(vi) -(CH₂)_{y}(OCH₂CH₂)ₐ[OCH₂CH(CH₂CH₃)]_{c}OR', and
(vii) -(CH₂)_{y}(OCH₂CHCH₃)_{b}OR',
where R' is hydrogen atom, an alkyl radical having from 1 to 4 carbon atoms, an aryl radical having 6 to 12 carbon atoms, an aralkyl radical having at least 6 carbon atoms; or an acyl radical and the integer y is 2-20; a is 1-120; b is 1-50; and c is 1-50.

Typical polyethers include -(CH₂CH₂0)₈H, -(CH₂CH₂0)₁₂H, -(CH₂CH₂0)₈CH₃, -(CH₂CH₂0)₁₂CH₃, -(CH₂CH₂0)₈C(0)CH₃, -(CH₂CH₂0)₂₀H, -(CH₂CH(CH₂CH₃)O)₁₀CH₃, and -(CH₂CHCH₃0)₅C(0)CH₃ or their blends. The molar ratio of NH to acrylate is normally varied from 1000 to 0.001, preferably from 6:1. Ratios of 1 or less are preferred for the preparation of flowable fluids or waxes. Above a ratio of 1, gels are formed.

Most of the copolymers described herein are produced without the aid of solvent. However, when a solvent is used, the solvent is best selected based on solubility of the final product. Typical solvents are aliphatic, aromatic, alcohols and water.

Our claimed composition can also include fillers, both reinforcing and extending types as are conventionally used. The fillers are present in an amount of up to 200 parts by weight of copolymer. Typical fillers include silica, aluminum oxide, hydrated aluminum hydroxide, diatomaceous earths, magnesium hydroxide, ground quartz, mica, calcium carbonate, clay, barium sulfate, zinc oxide, iron oxide and talcum. Various pigments, such as carbon black or titanium dioxide, may also be added as fillers, as can common fumed or precipitated silicas and colloidal silicas. Precipitated surface treated calcium carbonates are used as semi-reinforcing fillers, and ground calcium carbonates, either treated or untreated, are used as extending fillers.

The compositions of the present invention are useful as profoam agents, anticaking agents, water repellents, antifouling agents, antifoam agents, surfactants, fiber treatment agents, protective coatings and slip aids.

In the following examples, the term "polyethylene glycol 400 monoacrylate" represents an acrylated polyether having the structure CH₂=CHC(O)O(C₂H₄O)₈H (Mw=512.6); the term "polypropylene glycol 400 monoacrylate" represents an acrylated polyether having the structure CH₂=CHC(O)O(C₃H₆O)₅H (Mw=362.5); the term "polyethylene glycol 540 monoacrylate" represents an acrylated polyether having the structure CH₂=CHC(O)O(C₂H₄O)₁₁CH3 (Mw=541); the term "polyethylene glycol 1000 monoacrylate" represents an acrylated polyether having the structure CH₂=CHC(O)O(C₂H₄O)₂₀H (Mw=952); and the term "polyethylene glycol 2000 monoacrylate" represents an acrylated polyether having the structure CH₂=CHC(O)O(C₂H₄O)₄₃H (Mw=1964).

The viscosities of the examples were measured at 23°C. using a Brookfield Digital Viscometer, Model DC-II with spindle #3 at 60 rpm, made by Brookfield Engineering Laboratories, Stoughton, MA.

### Example 1 M'D₁₉₃M' + PEG 400

(NH₂CH₂CH₂CH₂)Me₂SiO(SiMe₂O)₁₉₃SiMe₂(CH₂CH₂CH₂NH₂) (19.43 g, 1.33 mmoles) and polyethylene glycol 400 monoacrylate (0.57 g, 1.33 mmoles) were weighed into a 18.5 ml. vial. The solution was stirred with a magnetic stirrer and stir bar for one hour. The final material was a cloudy, white liquid, with 23°C. viscosity = 1660 mPa·s (cp).

### Example 2 MD₃D''₁M + PEG 400

Me₃SiO(SiMe₂O)₃{(NH₂CH₂CH₂NHCH₂CH(CH₃)CH₂)MeSiO}₁SiMe₃ (10.16 g, 10.0 mmoles) and polyethylene glycol 400 monoacrylate (10.25 g, 20.0 mmoles) were weighed into a 18.5 ml. vial. The solution was stirred with a magnetic stirrer and stir bar for one hour. The final material was a clear, yellow liquid with 23°C. viscosity = 925 mPa·s (cp).

### Example 3 MD₁₀₀D''₃M + PEG 400

Me₃SiO(SiMe₂O)₁₀₀{(NH₂CH₂CH₂NHCH₂CH(CH₃)CH₂)MeSiO}₃SiMe₃ (17.12 g, 2.12 mmoles) and polyethylene glycol 400 monoacrylate (3.08 g, 6.01 mmoles) were weighed into a 18.5 ml. vial. The solution was stirred with a magnetic stirrer and stir bar for one hour. The final material was a gel.

### Example 4 MD₁₀D''₂M + PPG 400

Me₃SiO(SiMe₂O)₁₀{(NH₂CH₂CH₂NHCH₂CH(CH₃)CH₂)MeSiO}₂ SiMe₃ (8.55 g, 5.00 mmoles) and polypropylene glycol 400 monoacrylate (7.25 g, 20.0 mmoles) were weighed into a 18.5 ml. vial. The solution was stirred with a magnetic stirrer and stir bar for one hour. The final material was a clear liquid with 23°C. viscosity = 752 mPa·s (cp).

### Example 5 MD₃M''₁M + PEG 2000

Me₃SiO(SiMe₂O)₃{(NH₂CH₂CH₂NHCH₂CH(CH₃)CH₂)MeSiO}₁SiMe₃ (10.16 g, 10.0 mmoles) and polyethylene glycol 2000 monoacrylate (26.97 g, 10.0 mmoles) were weighed into a 18.5 ml. vial. The solution was stirred with a magnetic stirrer and stir bar for one hour. The final material was a wax at room temperature.

### Example 6 MD₁₀₀D'M + PPG 400

Me₃SiO(SiMe₂O)₁₀₀{(NH₂CH₂CH₂CH₂)MeSiO}₁SiMe₃ (17.12 g, 2.23 mmoles) and polypropylene glycol 400 monoacrylate (2.18 g, 6.14 mmoles) were weighed into a 18.5 ml. vial. The solution was stirred with a magnetic stirrer and stir bar for one hour. The final material was a cloudy liquid with 23°C. viscosity = 6810 mPa·s (cp).

### Example 7 M'D₁₀M' + PPG 400 + PEG 400

(NH₂CH₂CH₂NHCH₂CH(CH₃)CH₂)Me₂SiO(SiMe₂O)₁₀SiMe₂ (CH₂CH₂CH₂NHCH₂CH₂NH₂) (6.76 g, 6.49 mmoles) and polypropylene glycol 400 monoacrylate (2.34 g, 6.46 mmoles) and polyethylene glycol 400 monoacrylate (3.31 g, 6.46 mmoles) were weighed into a 18.5 ml. vial. The solution was stirred with a magnetic stirrer and stir bar for one hour. The final material was a clear liquid with 23°C. viscosity of 1660 mPa·s (cp).

### Example 8 MD₁₀₀'M + PPG 400 + PEG 400

Me₃SiO(SiMe₂O)₁₀₀{(NH₂CH₂CH₂CH₂)MeSiO}₁SiMe₃ (5.00 g, 0.645 mmoles), polypropylene glycol 400 monoacrylate (2.16 g, 5.97 mmoles) and polyethylene glycol 400 monoacrylate (3.06 g, 5.98 mmoles) were weighed into a 18.5 ml. vial. The solution was stirred with a magnetic stirrer and stir bar for one hour. The final material was a clear liquid with 23°C. viscosity = 1580 mPa·s (cp).

### Example 9 D^{''}₄ + PPG 400

(OSiMeCH₂CHMeCH₂NH(CH₂)₂NH₂)₄ (6.96 g, 10 mmoles) and polypropylene glycol 400 monoacrylate (3.62 g 10 mmoles) were added to a 18.5 ml. vial. The solution was stirred with a magnetic stirrer and stir bar for one hour. The final material was a clear fluid with 23°C. viscosity = 7530 mPa·s (cp).

### Example 10 EO NONYLPHENOL ACRYLATE

(NH₂CH₂CH₂NHCH₂CH(CH₃)CH₂)Me₂SiO(SiMe₂O)₁₀SiMe₂ (CH₂CH₂CH₂NHCH₂CH₂NH₂) (10.4 g, 10 mmoles) and ethoxylated nonylphenol acrylate (CH₂=CHC(O)OC₉H₁₉C₆H₄OC₂H₅) (4.5 g, 10.0 moles) were weighed into a 18.5 ml. vial. The solution was stirred with a magnetic stirrer and stir bar for one hour. The final material was a clear fluid, with a 23°C. viscosity of 1160 mPa·s (cp).

(NH₂CH₂CH₂NHCH₂CH(CH₃)CH₂)Me₂SiO(SiMe₂O)₁₀SiMe₂(CH₂CH₂CH₂NHCH₂CH₂NH₂) (7 g, 6.72 mmoles) and ethoxylated nonylphenol acrylate (CH₂=CHC(O)OC₉H₁₉C₆H₄OC₂H₅) (6.6 g, 14.67 mmoles) were weighed into a 18.5 ml. vial. The solution was stirred with a magnetic stirrer and stir bar for one hour. The final material was a clear fluid, with a 23°C. viscosity of 1240 mPa·s (cp).

### Example 11 TRIDECYLACRYLATE

(NH₂CH₂CH₂NHCH₂CH(CH₃)CH₂)Me₂SiO(SiMe₂O)₁₀SiMe₂(CH₂CH₂CH₂NHCH₂CH₂NH₂) (10.49 g, 10.07 mmoles) and tridecylacrylate, (CH₂=CHC(O)O(CH₂)₁₂CH₃) (2.5 g, 9.84 mmoles) were weighed into a 18.5 ml. vial. The solution was stirred with a magnetic stirrer and stir bar for one hour. The final material was a clear fluid, with a 23°C. viscosity of 220 mPa·s (cp).

(NH₂CH₂CH₂NHCH₂CH(CH₃)CH₂)Me₂SiO(SiMe₂O)₁₀SiMe₂ (CH₂CH₂CH₂NHCH₂CH₂NH₂) (10.49 g, 10.07 mmoles) and tridecylacrylate, (CH₂=CHC(O)O(CH₂)₁₂CH₃) (5.00 g, 19.7 mmoles) were weighed into a 18.5 ml. vial. The solution was stirred with a magnetic stirrer and stir bar for one hour. The final material was a clear fluid, with a 23°C. viscosity of 200 mPa·s (cp).

### Example 12 CAPROLACTONE ACRYLATE

(NH₂CH₂CH₂NHCH₂CH(CH₃)CH₂)Me₂SiO(SiMe₂O)₁₀SiMe₂(CH₂CH₂CH₂NHCH₂CH₂NH₂) (8.00 g, 7.68 mmoles) and caprolactone acrylate (CH₂=CHC(O)O(CH₂)₂(OC(O)(CH₂)₅O)₂H (5.23 g, 15.2 mmoles) were weighed into a 18.5 ml. vial. The solution was stirred with a magnetic stirrer and stir bar for one hour. The final material was a clear fluid, with a 23°C. viscosity of 200 mPa·s (cp).

### Example 13 LAURYL ACRYLATE

(NH₂CH₂CH₂NHCH₂CH(CH₃)CH₂)Me₂SiO(SiMe₂O)₁₀SiMe₂(CH₂CH₂CH₂NHCH₂CH₂NH₂) (8.00 g, 7.68 mmoles) and lauryl acrylate (CH₂=CHC(O)O(CH₂)₁₁CH₃)(1.85 g, 7.70 mmoles) were weighed into a 18.5 ml. vial. The solution was stirred with a magnetic stirrer and stir bar for one hour. The final material was a clear fluid, with a 23°C. viscosity of 190 mPa·s (cp).

(NH₂CH₂CH₂NHCH₂CH(CH₃)CH₂)Me₂SiO(SiMe₂O)₁₀SiMe₂(CH₂CH₂CH₂NHCH₂CH₂NH₂) (7.00 g, 6.72 mmoles) and lauryl acrylate (3.23 g, 13.45 mmoles) were weighed into a 18.5 ml. vial. The solution was stirred with a magnetic stirrer and stir bar for one hour. The final material was a clear fluid, with a 23°C. viscosity of 150 mPa·s (cp).

(NH₂CH₂CH₂NHCH₂CH(CH₃)CH₂)Me₂SiO(SiMe₂O)₁₀SiMe₂(CH₂CH₂CH₂NHCH₂CH₂NH₂) (7.00 g, 6.72 mmoles) and lauryl acrylate (6.46 g, 26.92 mmoles) were weighed into a 18.5 ml. vial. The solution was stirred with a magnetic stirrer and stir bar for one hour. The final material was a clear fluid, with a 23°C. viscosity of 60 mPa·s (cp).

(NH₂CH₂CH₂NHCH₂CH(CH₃)CH₂)Me₂SiO(SiMe₂O)₁₀SiMe₂(CH₂CH₂CH₂NHCH₂CH₂NH₂) (6 g, 5.76 mmoles) and lauryl acrylate (8.31 g, 34.63 mmoles) were weighed into a 18.5 ml. vial. The solution was stirred with a magnetic stirrer and stir bar for one hour. The final material was a clear fluid, with a 23°C. viscosity of 210 mPa·s (cp).

### Example 14 MD₃D''M + PEG 400

Me₃SiO(SiMe₂O)₃{(NH₂CH₂CH₂NHCH₂CH(CH₃)CH₂)MeSiO}₁SiMe₃ (5.60 g, 5.51 mmoles) and (polyethylene glycol 400 monoacrylate) (5.40 g, 10.54 mmoles) were weighed into a 18.5 ml. vial. The solution was stirred with a magnetic stirrer and stir bar for one hour. The final material was a clear, yellow liquid with 23°C. viscosity of 760 mPa·s (cp).

### Example 15 MD₁₀D''₂M

Me₃SiO(SiMe₂O)₁₀{(NH₂CH₂CH₂NHCH₂CH(CH₃)CH₂)MeSiO}₂SiMe₃ (9.00 g, 7.19 mmoles) and polyethylene glycol 400 monoacrylate (3.89 g, 7.9 mmoles) were weighed into a 18.5 ml. vial. The solution was stirred with a magnetic stirrer and stir bar for one hour. The final material was a clear liquid with 23°C. viscosity of 381 mPa·s (cp).

Me₃SiO(SiMe₂O)₁₀{(NH₂CH₂CH₂NHCH₂CH(CH₃)CH₂)MeSiO}₂SiMe₃ (6.94 g, 5.54 mmoles) and polyethylene glycol 400 monoacrylate (6.00 g, 11.09 mmoles) were weighed into a 18.5 ml. vial. The solution was stirred with a magnetic stirrer and stir bar for one hour. The final material was a hazy liquid with 23°C. viscosity of 651 mPa·s (cp).

Me₃SiO(SiMe₂O)₁₀{(NH₂CH₂CH₂NHCH₂CH(CH₃)CH₂)MeSiO}₂SiMe₃ (4.15 g, 3.31 mmoles) and polyethylene glycol 400 monoacrylate (8.00 g, 15.62 mmoles) were weighed into a 18.5 ml. vial. The solution was stirred with a magnetic stirrer and stir bar for one hour. The final material was a clear liquid with 23°C. viscosity of 551 mPa·s (cp).

### Example 16 M''D₁₀M'' + PEG 400

(NH₂CH₂CH₂NHCH₂CH(CH₃)CH₂)Me₂SiO(SiMe₂O)₁₀SiMe₂(CH₂CH₂CH₂NHCH₂CH₂NH₂) (5,78 g, 5.55 mmoles) and polypropylene glycol 400 monoacrylate (6.00 g, 16.57 mmoles) were weighed into a 18.5 ml. vial. The solution was stirred with a magnetic stirrer and stir bar for one hour. The final material was a clear liquid and had a 23°C. viscosity of 1310 mPa·s (cp).

### Example 17 MD₁₀₀D''M + PEG 400

Me₃SiO(SiMe₂O)₁₀₀{(NH₂CH₂CH₂NHCH₂CH(CH₃)CH₂)MeSiO}₁SiMe₃ (14.35 g, 1.85 mmoles) and polyethylene glycol 400 monoacrylate (1.00 g, 1.85 mmoles) were weighed into a 18.5 ml. vial. The solution was stirred with a magnetic stirrer and stir bar for one hour. The final material was a hazy liquid, with a 23°C. viscosity of 190 mPa·s (cp).

### Example 18 MD₁₀₀D'M + PEG2000

Me₃SiO(SiMe₂O)₁₀₀{(NH₂CH₂CH₂CH₂)MeSiO}₁SiMe₃ (7.69 g, 1.0 mmoles) and polyethylene glycol 2000 monoacrylate (2.70 g, 1.0 mmoles) were weighed into a 18.5 ml. vial. The solution was stirred with a magnetic stirrer and stir bar for one hour. The final material was a solid wax.

Me₃SiO(SiMe₂O)₁₀₀{(NH₂CH₂CH₂CH₂)MeSiO}₁SiMe₃ (7.69 g, 1.0 mmoles) and polyethylene glycol 2000 monoacrylate (1.84 g, 0.68 mmoles) were weighed into a 18.5 ml. vial. The solution was stirred with a magnetic stirrer and stir bar for one hour. The final material was a solid wax.

### Example 19 MD₁₀₀D''M + PEG 2000, PEG 1000

Me₃SiO(SiMe₂O)₁₀₀{(NH₂CH₂CH₂NHCH₂CH(CH₃)CH₂)MeSiO}₁SiMe₃ (7.75 g, 1.0 mmoles) and polyethylene glycol 2000 monoacrylate (2.70 g, 1.0 mmoles) were weighed into a 18.5 ml. vial. The solution was stirred with a magnetic stirrer and stir bar for one hour. The final material was a solid.

Me₃SiO(SiMe₂O)₁₀₀{(NH₂CH₂CH₂NHCH₂CH(CH₃)CH₂)MeSiO}₃SiMe₃ (7.75 g, 1.0 mmoles) and polyethylene glycol 1000 monoacrylate (1.84 g, 1.0 mmoles) were weighed into a 18.5 ml. vial. The solution was stirred with a magnetic stirrer and stir bar for one hour. The final material was a solid wax.

### Example 20 MD₁₀D''₂M + PEG 2000 and PEG 1000

Me₃SiO(SiMe₂O)₁₀{(NH₂CH₂CH₂NHCH₂CH(CH₃)CH₂)MeSiO}₂SiMe₃ (2.50 g, 2.00 mmoles) and polyethylene glycol 2000 monoacrylate (5.40 g, 2.00 mmoles) were weighed into a 18.5 ml. vial. The solution was stirred with a magnetic stirrer and stir bar for one hour. The final material was a solid wax.

Me₃SiO(SiMe₂O)₁₀{(NH₂CH₂CH₂NHCH₂CH(CH₃)CH₂)MeSiO}₂SiMe₃ (3.50 g, 2.80 mmoles) and polyethylene glycol 1000 monoacrylate (5.15 g, 2.80 mmoles) were weighed into a 18.5 ml. vial. The solution was stirred with a magnetic stirrer and stir bar for one hour. The final material was a solid wax.

### Example 21 M''D₁₀M'' + PEG 2000

(NH₂CH₂CH₂NHCH₂CH(CH₃)CH₂)Me₂SiO(SiMe₂O)₁₀SiMe₂(CH₂CH₂CH₂NHCH₂CH₂NH₂) (2.5 g, 2.40 mmoles) and polyethylene glycol 2000 monoacrylate (6.19 g, 2.30 mmoles) were weighed into a 18.5 ml. vial. The solution was stirred with a magnetic stirrer and stir bar for one hour. The final material was a solid wax.

(NH₂CH₂CH₂NHCH₂CH(CH₃)CH₂)Me₂SiO(SiMe₂O)₁₀SiMe₂(CH₂CH₂CH₂NHCH₂CH₂NH₂) (3.0 g, 2.88 mmoles) and polyethylene glycol 2000 monoacrylate (5.06 g, 1.88 mmoles) were weighed into a 18.5 ml. vial. The solution was stirred with a magnetic stirrer and stir bar for one hour. The final material was a solid wax.

### Example 22 MD₃D''1M + TFPMA

Me₃Si(SiMe20)₃{NH₂CH₂CH₂NHCH₃CH(CH₃)CH₂)MeSiO}₁SiMe₃ (10.16 g., 10.0 mmoles) and 2,2,3,3-tetrafluoropropyl acrylate (1.86 g., 10.0 mmoles) were weighed into a 18.5 ml. vial. The solution was stirred with a magnetic stirrer and stir bar for one hour. The final material was a water clear low viscosity fluid.

### Example 23 MD₁₀D''₂M + TFPMA

Me₃Si(SiMe₂0)₁₀{NH₂CH₂CH₂NHCH₃CH(CH₃)CH₂)MeSiO)₂SiMe₃ (12.51 g, 10.0 mmoles) and 2,2,3,3-tetrafluoropropyl acrylate (3.72 g, 20.0 mmoles) were weighed into a 18.5 ml. vial. The solution was stirred with a magnetic stirrer and stir bar for one hour. The final material was a water clear low viscosity fluid.

### Example 24 M''D₁₀M'' + TFPMA

(NH₂CH₂CH₂NHCH₂CH(CH₃)CH₂)Me₂SiO(SiMe₂(CH₂CH₂CH₂NHCH₂CH₂CH₂) (10.41 g, 10.0 mmoles) and 2,2,3,3-tetrafluoropropyl acrylate (3.72 g, 20.0 mmoles) were weighed into a 18.5 ml. vial. The solution was stirred with a magnetic stirrer and stir bar for one hour. The final material was a water clear low viscosity fluid.

### Example 25 MD₉₆0''₂M + TMPTA

Me₃Si(SiMe₂0)₉₆{NH₂CH₂CH₂NHCH₃CH(CH₃)CH₂)MeSiO}₂SiMe₃ (10.0 g.) and trimethanolpropanetriacrylate (Sartomer™ 351) (1.0 g) were weighed into a 18.5 ml. vial. The solution was stirred for two minutes (until homogeneous) and poured into an aluminum weighing dish to a thickness of 3.35 mm (132 mils). The time for the material to form a cured skin on the sample (SOT or Skin Over Time) was recorded, as well as the time for the complete gelation (thorough cure), and found to be 105 minutes and 180 minutes respectively. A Shore hardness measurement of the resulting gel was taken on a Shore "OO" durometer and was found to be 45.

### Example 26 MD₉₆D''₂M + HDDA

Me₃Si(SiMe₂0)₉₆{NH₂CH₂CH₂NHCH₃CH(CH₃)CH₂)MeSiO}₂SiMe₃ (10.0 g) and hexanedioldiacrylate (Sartomer™ 238) (1.0 g) were weighed into a 18.5 ml. vial. The solution was stirred for two minutes (until homogeneous) and poured into an aluminum weighing dish to a thickness of 3.05 mm (120 mils). The time for the material to form a cured skin on the sample was recorded, as well as the time for the complete gelation (thorough cure), and found to be 24 to 48 hours and 48 hours respectively. A Shore hardness measurement of the resulting gel was taken on a Shore "OO" durometer and was found to be 3.

### Example 27 MD₉₆D''₂M + PETA

Me₃Si(SiMe₂0)₉₆{NH₂CH₂CH₂NHCH₃CH(CH₃)CH₂)MeSiO}₂SiMe₃ (10.0 g) and dipenaerythritol pentaacrylate (Sartomer™ 399) (1.0 g) were weighed into a 18.5 ml. vial. The solution was stirred for two minutes (until homogeneous) and poured into an aluminum weighing dish to a thickness of 3.05 mm (120 mils). The time for the material to form a cured skin on the sample was recorded, as well as the time for the complete gelation (thorough cure), and found to be 75 minutes and 105 minutes respectively. A Shore hardness measurement of the resulting gel was taken on a Shore "OO" durometer and was found to be 35.

### Example 28 MD₉₆D''₂M + Urethane Acrylate

Me₃Si(SiMe₂0)₉₆{NH₂CH₂CH₂NHCH₃CH(CH₃)CH₂)MeSiO}₂SiMe₃ (10.0 g) and hexafunctional aromatic urethane acrylate containing an acrylated polyol diluent (UCB Radcure Ebecryl® resin 220) (1.0 g) were weighed into a 18.5 ml. vial. The solution was stirred for two minutes (until homogeneous) and poured into an aluminum weighing dish to a thickness of 3.1 mm. (122 mils). The time for the material to form a cured skin on the sample was recorded, as well as the time for complete gelation (thorough cure), and found to be less than 30 minutes and 60 minutes, respectively. A Shore hardness measurement of the resulting gel was taken on a Shore "OO" durometer and was found to be 40.

### Example 29 MD₉₆''₂M + TMPTA + DIATOMACIOUS EARTH

Me₃Si0(SiMe₂0)₉₆{NH₂CH₂CH₂NHCH₃CH(CH₃)CH₂)MeSiO}₂SiMe₃ (10.0 g) and trimethanolpropanetriacrylate (Sartomer™ 351) (1.0 g) along with 3.5 grams of Celite™ FP-3 filler were weighed into a 18.5 ml. vial. The solution was stirred for two minutes (until homogeneous) and poured into an aluminum weighing dish to a thickness of 4.3 mm. (170 mils). The time for the material to form a cured skin on the sample was recorded, as well as the time for the complete gelation (thorough cure) and found to be 100 minutes and 140 minutes, respectively. A Shore hardness measurement of the resulting gel was taken on a Shore "OO" durometer and was found to be 83.

### Example 30 MD₉₂D''₂M + HDDA

Me₃Si0(SiMe₂0)₉₆{NH₂CH₂CH₂NHCH₃CH(CH₃)CH₂)MeSiO}₂SiMe₃ (10.0 g) and hexanedioldiacrylate (Sartomer™ 238) (2.0 g) were weighed into a 18.5 ml. vial. The solution was stirred for two minutes (until homogeneous) and poured into an aluminum weighing dish to a thickness of 3.8 mm (150 mils). The time for the material to form a cured skin on the sample was recorded, as well as the time for the complete gelation (thorough cure), and found to be 48 hours and 48 to 72 hours, respectively. A Shore hardness measurement of the resulting gel was taken on a Shore "OO" durometer and was found to be less than 1, and was characterized as a sticky gel.

## Claims

1. A composition comprising the reaction product of (A) and (B) wherein:
(A) is at least one polysiloxane selected from
R₃SiO(SiR₂O)ₓSiR₃ (i)
or 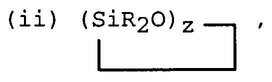 where:
x has an average value of from 0 to 1000,
z has a value of at least 3,
R is independently selected from the group
consisting of hydroxyl, alkoxy, tri-fluoropropyl, alkyls of 1 to 4 carbon atoms, phenyl and an amine functional group, with the proviso that at least one R on the polysiloxane is an amine functional group;
(B) is at least one acrylate having the formula 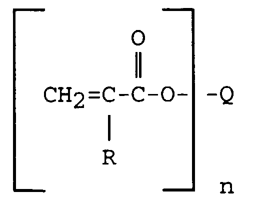 where R is H or CH₃, n ≥ 1, and Q is an organic group.

2. The composition of claim 1, wherein the composition additionally contains a solvent, and the solvent is selected from the group consisting of water, alcohols, and aliphatic or aromatic hydrocarbons.

3. The composition of claim 1, wherein Q is a polyether selected from the group consisting of:
(i) -(CH₂)_{y}(OCH₂CH₂)ₐ(OCH₂CHCH₃)_{b}[OCH₂CH(CH₂CH₃)]_{c}OR',
(ii) -(CH₂)_{y}(OCH₂CH₂)ₐOR',
(iii) -(CH₂)_{y}(OCH₂CH₂)ₐ(OCH₂CHCH₃)_{b}OR',
(iv) -(CH₂)_{y}[OCH₂CH(CH₂CH₃)]_{c}OR',
(v) -(CH₂)_{y}(OCH₂CHCH₃)_{b}[OCH₂CH(CH₂CH₃)]_{c}OR',
(vi) -(CH₂)_{y}(OCH₂CH₂)ₐ[OCH₂CH(CH₂CH₃)]_{c}OR', and
(vii) -(CH₂)_{y}(OCH₂CHCH₃)_{b}OR',
where R' is hydrogen atom, an alkyl radical having from 1 to 4 carbon atoms, an aryl radical having 6 to 12 carbon atoms, an aralkyl radical having at least 6 carbon atoms; or an acyl radical and the integer y is 2-20; a is 1-120; b is 1-50; and c is 1-50.

4. The composition of claim 1, wherein the amine functional group is selected from the group consisting of
(i) -CH₂CH₂CH₂NH₂,
(ii) -CH₂CH₂CH₂N(H)CH₂CH₂NH₂,
(iii) -CH₂CH₂CH₂N(H)CH₂CH₂N(H)CH₂CH₂NH₂,
(iv) -CH₂CH₂CH₂CH₂NH₂,
(v) -CH₂CH₂CH₂CH₂CH₂NH₂,
(vi) -CH₂CH₂CH₂N(H)Me,
(vii) -CH₂CH₂CH₂N(H)CH₂CH₂NMe₂,
(viii) -CH₂CH₂CH₂N(Et)H,
(ix) -CH₂CH(CH₃)CH₂N(H)CH₂CH₂NH₂ and
(x) -CH₂CH(CH₃)CH₂NH₂,
where Me represents a methyl group and Et represents an ethyl group.
